(19) Europäisches Patentamt
European Patent Office
Office européen des brevets

(11) Publication number: 0 128 642 B1

(12) EUROPEAN PATENT SPECIFICATION

(45) Date of publication of patent specification: 31.08.88

(51) Int. Cl.[4]: A 01 N 47/30 // (A01N47/30, 41:04, 37:10, 37:04, 35:10)

(21) Application number: 84302447.2

(22) Date of filing: 10.04.84

# (54) Herbicidal compositions.

(30) Priority: 18.05.83 GB 8313774

(43) Date of publication of application: 19.12.84 Bulletin 84/51

(45) Publication of the grant of the patent: 31.08.88 Bulletin 88/35

(84) Designated Contracting States: BE CH DE FR GB IT LI NL SE

(56) References cited:
GB-A-1 481 389

CENTRAL PATENTS INDEX, BASIC ABSTRACTS JOURNAL, section C, AGDOC, week Y38, September 1977

CHEMICAL ABSTRACTS, vol. 91, no. 13, 24th September 1979, page 223, no. 103738e, Columbus, Ohio, US

(73) Proprietor: IMPERIAL CHEMICAL INDUSTRIES PLC
Imperial Chemical House Millbank
London SW1P 3JF (GB)

(72) Inventor: Graciet, Bernard
Principe de Vergara 185
Madrid (ES)

(74) Representative: Downes, John Edward et al
Imperial Chemical Industries PLC
Legal Department: Patents
PO Box 6 Welwyn Garden City
Herts, AL7 1HD (GB)

EP 0 128 642 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to methods of controlling weeds, and to herbicidal mixtures of isoproturon with a compound of formula I useful therein.

According to the present invention there is provided a process of inhibiting the growth of weeds in crops of wheat and barley, which comprises applying to the area of the crop a composition comprising a mixture of isoproturon with a compound of the formula (I):—

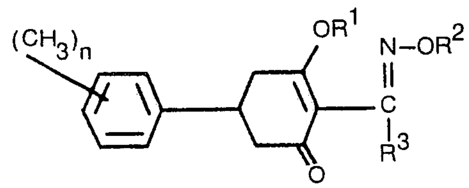

(I)

wherein $R^1$ is hydrogen, benzoyl, or benzoyl substituted with from one to three substituents chosen from halogen, nitro, and cyano;

$R^2$ is methyl, ethyl, *n*-propyl, allyl, or propargyl;

$R^3$ is methyl, ethyl, *n*-propyl, or propargyl; and

n is 2, 3, 4 or 5; the rate of application of the compound of formula I being from 50 to 500 grams per hectare and the rate of application of isoproturon being from 500 to 2000 grams per hectare.

It may be noted that when $R^1$ is hydrogen in formula (I), the compounds used in the invention may exist in any of the three tautomeric forms shown below:—

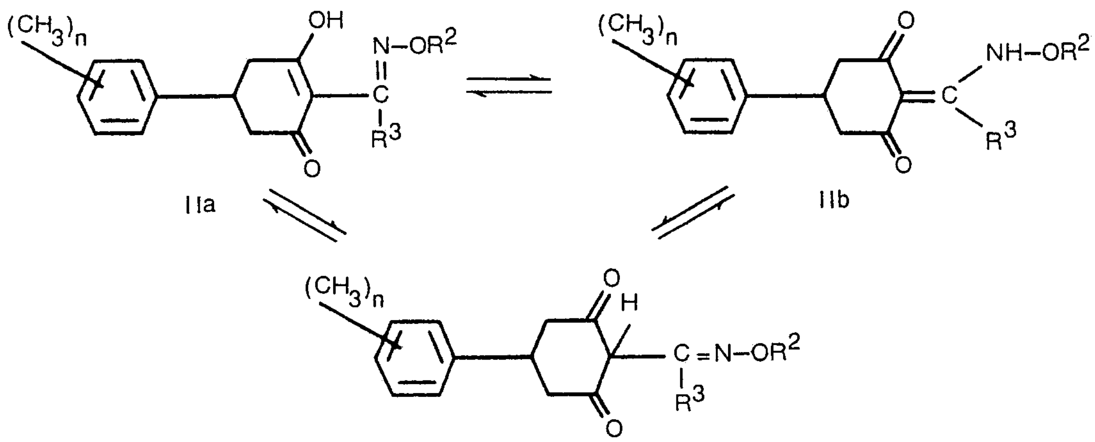

IIa IIb IIc

A subclass of compounds for use in the invention comprises those compounds of formula I in which the benzene ring is substituted in the 2-, 4- and 6-positions with methyl groups. That is, compounds of formula III:

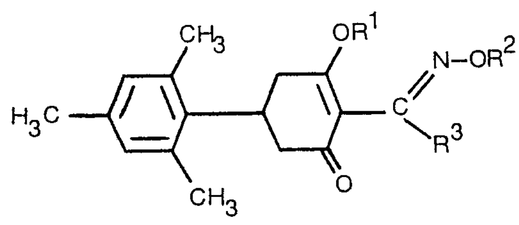

III

Specific examples of compounds for use in the method of the invention include those compounds detailed in Table 1 below.

TABLE I

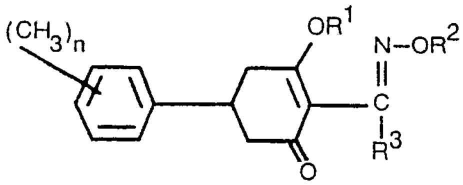

(I)

| Compound No | $(CH_3)_n$ | $R^1$ | $R^2$ | $R^3$ |
|---|---|---|---|---|
| 1 | $2,3-(CH_3)_2$ | H | $C_2H_5$ | $C_2H_5$ |
| 2 | $2,4-(CH_3)_2$ | H | $C_2H_5$ | $C_2H_5$ |
| 3 | $2,5-(CH_3)_2$ | H | $C_2H_5$ | $C_2H_5$ |
| 4 | $2,6-(CH_3)_2$ | H | $C_2H_5$ | $C_2H_5$ |
| 5 | $3,4-(CH_3)_2$ | H | $C_2H_5$ | $C_2H_5$ |
| 6 | $3,5-(CH_3)_2$ | H | $C_2H_5$ | $C_2H_5$ |
| 7 | $2,4,6-(CH_3)_3$ | H | $C_2H_5$ | $C_2H_5$ |
| 8 | $2,4,5-(CH_3)_3$ | H | $C_2H_5$ | $C_2H_5$ |
| 9 | $2,3,5,6-(CH_3)_4$ | H | $C_2H_5$ | $C_2H_5$ |
| 10 | $2,3,4,6-(CH_3)_4$ | H | $C_2H_5$ | $C_2H_5$ |
| 11 | $3,4-(CH_3)_2$ | $COC_6H_5$ | $C_2H_5$ | $C_2H_5$ |
| 12 | $2,5-(CH_3)_2$ | $COC_6H_5$ | $C_2H_5$ | $C_2H_5$ |
| 13 | $2,3-(CH_3)_2$ | $COC_6H_5$ | $C_2H_5$ | $C_2H_5$ |
| 14 | $2,4,6-(CH_3)_3$ | $COC_6H_5$ | $C_2H_5$ | $C_2H_5$ |
| 15 | $2,4,6-(CH_3)_3$ | H | $CH_2CH=CH_2$ | $n-C_3H_7$ |
| 16 | $2,4,6-(CH_3)_3$ | H | $CH_2CH=CH_2$ | $C_2H_5$ |
| 17 | $2,4,6-(CH_3)_3$ | H | $C_2H_5$ | $n-C_3H_7$ |

The compounds of formula (I) used in the method of the invention and processes for preparing them, are described in pending European Patent Application No 80301. For convenience in reference, however, a process for preparing the compounds is outlined in Scheme A below:

Scheme A

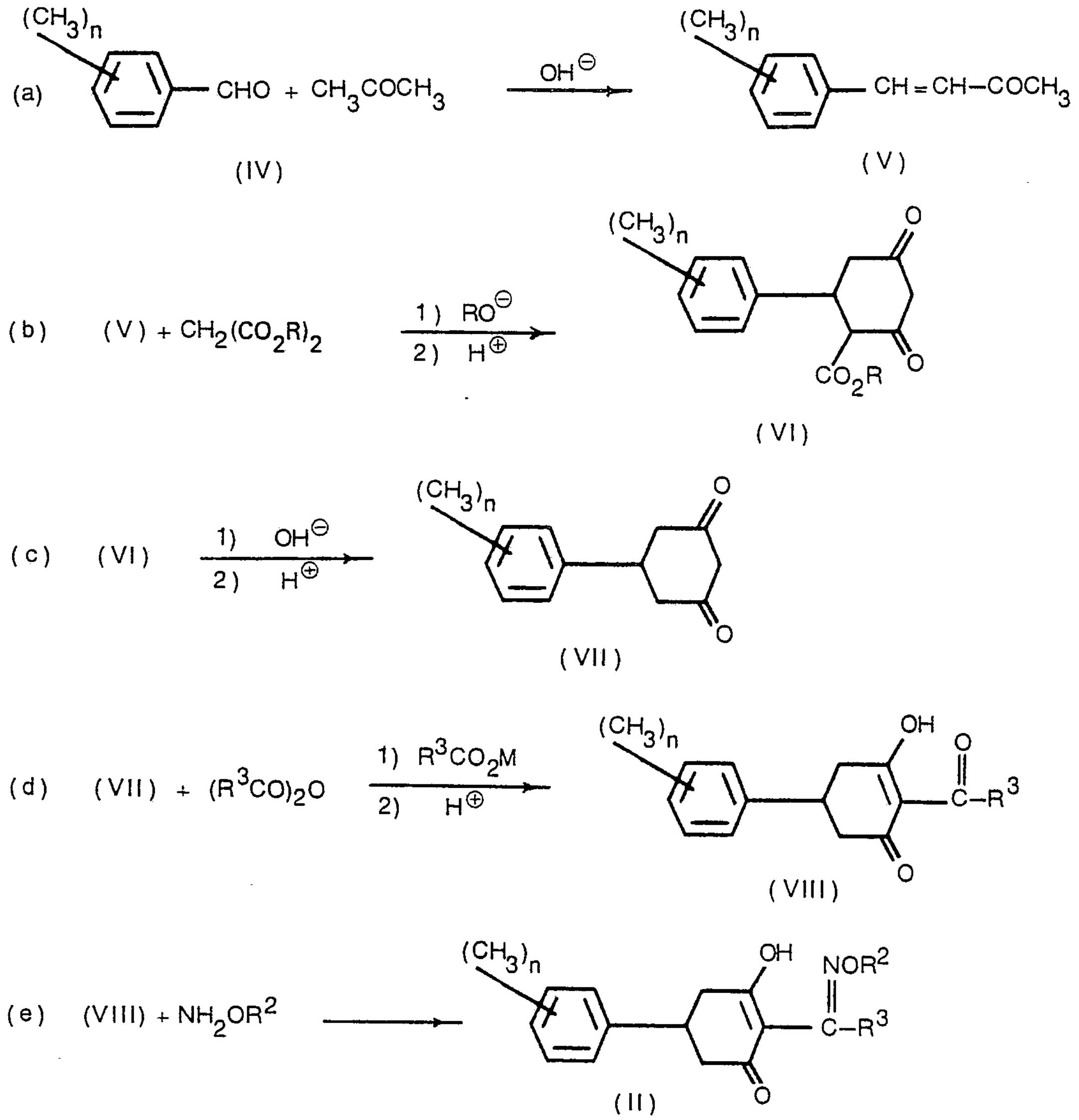


According to Scheme A, a methyl-substituted benzaldehyde IV is condensed with acetone to give the unsaturated ketone (V). This is in turn condensed in step (b) with a malonic ester (R stands for an alkyl group of e.g. 1 to 6 carbon atoms in the malonic ester formula) to give the 5-(substituted phenyl) cyclohexane-1,3-dione derivative of formula (VI). This is then subjected to alkaline hydrolysis followed by acidification and decarboxylation to give the cyclohexane 1,3-dione (VII). This is then reacted in step (d) with an acid anhydride $(R^3CO)_2O$ in presence of a salt of the acid $R^3CO_2M$, to give the 2-acyl-5-(substituted phenyl) cyclohexane-dione of formula (VIII). This is then reacted in step (e) with an O-substituted hydroxylamine to give the compound (II). Compounds of formula I in which $R^1$ is an optionally substituted benzoyl radical may be prepared from compounds of formula II by reaction with the appropriate benzoyl halide as required.

The other compound used in the process of the invention, isoproturon, is a commercially available herbicide often referred to as IPU and having the following structural formula:—

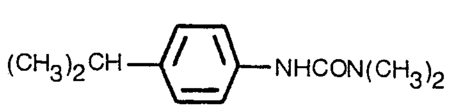

The composition comprising a compound of formula (I) and isoproturon is applied preferably in early spring to the crop area of winter wheat and winter barley.

The proportions of compound (I) and isoproturon may vary within the ratios given above, depending upon factors such as the identity of the particular weeds to be controlled. However, by way of example, a suitable rate of application may comprise from 1000 to 1500 grams per hectare of isoproturon in conjunction with 50 to 150 grams per hectare of a compound of formula (I).

Depending upon the identity of the weeds likely to be present it may be desirable to add a further herbicide to the combination of compound of formula (I) and isoproturon. Thus where broad-leaved weeds may be prevalent it may be preferred to add a herbicide capable of controlling such weeds (eg mecoprop, bromoxynil or ioxynil) at the usual rates employed for such herbicides.

In general, the compounds used in the process of the invention are applied in admixture with a carrier or diluent. The carrier may be solid or liquid, and may comprise one or more adjuvants of various kinds, for example a surface-active agent.

In another aspect, therefore, the invention provides a herbicidal composition comprising a compound of formula (I) in admixture with isoproturon. Preferably the composition further contains a carrier comprising a solid or liquid diluent. The composition preferably also contains a surface-active agent.

The solid compositions of the invention may be for example, in the form of dusting powders, or may take the form of granules. Suitable solid diluents include, for example, kaolin, bentonite, kieselguhr, dolomite, calcium carbonate, talc, powdered magnesia, and Fuller's earth.

Solid compositions may also be in the form of dispersible powders or grains comprising in addition to the active ingredient, a wetting agent to facilitate the dispersion of the powder or grains in liquids. Such powders or grains may include fillers, suspending agents and the like.

Liquid compositions include aqueous solutions, dispersions and emulsions containing the active ingredient preferably in the presence of one or more surface active agents. Water or organic liquids may be used to prepare solutions, dispersions, or emulsions of the active ingredient. The liquid compositions of the invention may also contain one or more corrosion inhibitors for example lauryl isoquinolinium bromide.

Surface active agents may be of the cationic, anionic or non-ionic type. Suitable agents of the cationic type include for example quaternary ammonium compounds, for example cetyltrimethyl ammonium bromide. Suitable agents of the anionic type include for example soaps, salts of aliphatic mono-esters of sulphuric acid, for example sodium lauryl sulphate; and salts of sulphonated aromatic compounds, for example dodecyl-benzenesulphonate, sodium, calcium and ammonium ligno-sulphonate, butyl-naphthalene sulphonate, and a mixture of the sodium salts of diisopropyl- and triisopropyl-naphthalenesulphonic acid. Suitable agents of the non-ionic type include, for example, the condensation products of ethylene oxide with fatty alcohols such as oleyl alcohol and cetyl alcohol, or with alkyl phenols such as octylphenol, nonylphenol, and octylcresol. Other non-ionic agents are the partial esters derived from long chain fatty acids and hexitol anhydrides, for example, sorbitol monolaurate; the condensation products of the said partial esters with ethylene oxide and the lecithins.

The compositions which are to be used in the form of aqueous solutions, dispersions or emulsions are generally supplied in the form of concentrate containing a high proportion of the active ingredient, the concentrate being diluted with water before use. These concentrates are usually required to withstand storage for prolonged periods and after such storage to be capable of dilution with water in order to form aqueous preparations which remain homogeneous for a sufficient time to enable them to be applied by conventional spray equipment.

One form of concentrate comprises a suspension of the finely divided active ingredients in water containing a surfactant to assist in maintaining the suspension in a dispersed state and to assist in the dispersion of the concentrate in water when diluted to the spray composition. Presumably the surfactant or surfactants comprise a non-ionic or anionic surface-active agent. Particular examples of such surface-active agents include the mixed condensation product of monylphenol with 31 molar proportions of ethylene oxide and a terminal block of 13 molar proportions of propylene oxide sold under the Trade Mark NPE 1800 and the block co-polymers of polyethylene oxide and polypropylene oxide sold under the "Pluroinic" Trade Mark.

The compositions used in the invention may contain, in addition to carriers and surface-active agents, various other constituents to increase their usefulness. They may contain, for example, buffering salts to maintain the pH of the composition within a desired range; antifreeze agents, for example urea or propylene glycol; adjuvants, for example, oils and humectants; and sequestrants, for example citric acid and ethylenediaminetetracetic acid, which help to prevent the formation of insoluble precipitates when the compositions are diluted with hard water. Aqueous dispersions may contain anti-settling agents and anti-caking agents.

The compositions may in general contain a dye or pigment to impart a characteristic colour. Agents for increasing viscosity may be added to reduce the formation of fine droplets during spraying, and thereby reduce spray drift. Other additives useful for particular purposes will be known to those skilled in the formulation art.

In general concentrates may conveniently contain from 10 to 85% and preferably from 25 to 60% by weight of active ingredient. Dilute preparations ready for use may contain varying amounts of the active ingredient, depending upon the purpose for which they are to be used; however, dilute preparations

suitable for many uses contain between 0.01% and 10% and preferably between 0.1% and 1% by weight of the active ingredient.

The following Examples 1 to 7 describe the preparation of compounds useful in the process of the invention.

Example 1

2-[1-(Ethoxyimino)propyl]-3-hydroxy-5-mesitylcyclohex-2-en-1-one

(Compound No 7 in Table 1)

(i) An aqueous solution of 1% sodium hydroxide (29.5 ml) was added dropwise over a period of 5 minutes to a suspension of mesitylaldehyde (10 g; 68 mmole) in acetone (50 ml) and water (50 ml). The mixture was stirred at a temperature of 65°C for a period of 1.5 hours and then extracted with dichloromethane (200 ml). The organic extract was washed several times with water, dried over anhydrous sodium sulphate, and the solvent was removed by evaporation under reduced pressure using a rotary evaporator. The product 1-(2,4,6-trimethylphenyl)but-1-en-3-one, a viscous oil, solidified on standing to give a white solid (11.5 g; 90%), m.p. 64°C. Proton magnetic resonance spectrum ($CDCl_3$; δ in ppm): 2.25 (12H, m); 6.30 (1H, d); 6.88 (2H, s); 7.64 (1H, d).

(ii) Diethyl malonate (10.1 g; 60 mmole) was added to a solution of sodium metal (1.4 g; 60 mmole) in anhydrous absolute ethanol (50 ml) and the mixture was heated to reflux temperature. A mixture of 1-(2,4,6-trimethylphenyl)but-1-en-3-one (11.4 g; 61 mmole) in anhydrous absolute ethanol (50 ml) was added over a period of 2 minutes and the mixture was heated under reflux for a period of 2 hours. An aqueous solution of sodium hydroxide (7.3 g; 180 mmole in 100 ml of water) was added and the mixture was heated under reflux for a further 4.5 hours. The solution was poured into water (200 ml) and the aqueous mixture was extracted twice with ethyl acetate (100 ml). The aqueous phase was acidified with concentrated hydrochloric acid and warmed gently until the evolution of carbon dioxide ceased. The aqueous mixture was extracted with ethyl acetate, dried over anhydrous sodium sulphate, and the solvent was removed by evaporation under reduced pressure using a rotary evaporator. The product, 3-hydroxy-5-mesitylcyclohex-2-en-1-one, was obtained as a pale yellow solid (10.9 g; 77.4%), mp 165°C. Proton magnetic resonance spectrum (dimethylsulfoxide; δ in ppm): 2.0—4.1 (14H, m); 5.2 (1H, s); 6.8 (2H, s); 11.2 (1H, br.s).

(iii) Propionic anhydride (15.0 ml) was added cautiously to freshly prepared sodium methoxide :0.47 g; 9 mmole). On completion of the reaction 3-hydroxy-5-mesitylcyclohex-2-en-1-one (5.0 g; 22 mmole) was added and the reaction mixture was heated under reflux at a temperature of 160°C for a period of 2 hours. The excess propionic anhydride was removed by evaporation under reduced pressure using a rotary evaporator. Aqueous 30% sodium hydroxide solution (50 ml) was added to the residue and the mixture was heated under reflux for a period of 1 hour with vigorous stirring. After cooling the mixture was acidified with concentrated hydrochloric acid and the aqueous mixture was extracted with dichloromethane. The organic extracts were dried over anhydrous sodium sulphate and the solvent was removed by evaporation under reduced pressure using a rotary evaporator. The product, a brown oil, was purified by chromatography over silica gel (eluant dichloromethane) to give 3-hydroxy-5-mesityl-2-propionylcyclohex-2-en-1-one (3.17 g; 50.2%) as a pale yellow oil. Proton magnetic resonance spectrum ($CDCl_3$; δ in ppm): 1.60 (3H, t, J=8Hz); 2.24 (3H, s); 2.37 (6H, s); 2.64—5.26 (7H, m), 6.84 (2H, m); 18.26 (1H, s).

(iv) Ethoxyamine hydrochloride (0.45 g) and then aqueous 1% sodium hydroxide (18.4 ml) were added to a solution of 3-hydroxy-5-mesityl-2-propionylcyclohex-2-en-1-one (1.2 g; 4.2 mmole) in anhydrous absolute ethanol (200 ml). The mixture was stirred at room temperature for a period of 4 hours and then the ethanol was removed by evaporation under reduced pressure using a rotary evaporator. The residue was treated with dichloromethane and the organic phase was washed twice with dilute aqueous hydrochloric acid and twice with water. The organic phase was dried over anhydrous sodium sulphate and the solvent was removed by evaporation under reduced pressure to give the product, 2-[1-(ethoxyimino)propyl]-3-hydroxy-5-mesitylcyclohex-2-en-1-one (1.25 g; 93%), as a pale yellow oil.

The product was characterised by proton nuclear magnetic resonance and carbon-13 nuclear magnetic resonance spectroscopy.

Example 2

Compounds No 1, 2, 3, 4, 5, 6, 8, 9 and 10 (see Table 1) were prepared from the appropriate benzaldehyde derivative following essentially the same procedure as that described in Example 1 parts (i) to (iv). Each of the products was characterised by proton nuclear magnetic resonance and/or carbon-13 nuclear magnetic magnetic responance spectroscopy.

Example 3

3-Benzoyloxy-2-[1-(ethoxyimino)propyl]-5-mesityl-cyclohex-2-en-1-one

(Compound No 14 of Table 1)

Aqueous 1% sodium hydroxide solution (6 ml) was added to a solution of 2-[1-(ethoxyimino)propyl]-3-hydroxy-5-mesitylcyclohex-2-en-1-one (0.42 g; 1.28 mmole) in acetone (50 ml). The mixture was stirred at room temperature for a period of 5 minutes and then benzoyl chloride (0.2 g) was added dropwise. The mixture was stirred for a further period of 15 minutes and then the solvent was removed by evaporation under reduced pressure using a rotary evaporator. The product was purified by chromatography over silica gel (eluant dichloromethane) to give 3-benzoyloxy-2-[1-(ethoxyimino)propyl]-5-mesitylcyclohex-2-en-1-one (0.38 g; 68.6%) as a pale yellow oil.

The product was characterised by proton nuclear magnetic resonance spectroscopy.

Example 4

Compounds Nos 11, 12, and 13 (See Table 1) were prepared from the appropriate 2-[1-(ethoxyamino)-propyl]-3-hydroxy-5-(substituted phenyl)cyclohex-2-ene-1-one derivative and the appropriate acid chloride following essentially the same procedure as that described in Example 3. Each of the products was characterised by proton nuclear magnetic resonance spectroscopy.

Example 5
2-[1-(Allyloxyimino)butyl]-3-hydroxy-5-mesitylcyclohex-2-en-1-one
(Compound No 15 of Table 1)

(i) n-Butyryl chloride (2.3 g; 21.7 mmole) and then pyridine (1.7 g; 21.7 mmole) were added to a stirred mixture of 3-hydroxy-5-mesitylcyclohex-2-en-1-one (5.0 g; 21.7 mmole) and dichloromethane (50 ml) under a nitrogen atmosphere. The mixture was stirred at room temperature for a period of two hours and then poured into slightly acidic water. The organic phase was thoroughly extracted with dichloromethane. The combined organic phase and extracts were washed with water, dried over anhydrous magnesium sulphate and the solvent was removed by evaporation under reduced pressure using a rotary evaporator. The residue was dissolved in 1.2-dichloroethane (50 ml), stannic chloride (5.7 g; 22 mmole) was added and the mixture was heated under reflux for a period of 8 hours. The mixture was cooled and poured into water and the aqueous mixture was extracted several times with dichloromethane. The combined organic extracts were dried over anhydrous magnesium sulphate and the solvent was removed by evaporation under reduced pressure using a rotary evaporator. The residue was purified by chromatography over silica gel (eluant dichloromethane) to give 2-butyryl-3-hydroxy-5-mesitylcyclohex-2-en-1-one (2.4 g). Proton nuclear magnetic resonance spectrum ($CDCl_3$: in ppm): 1.01 (3H, t); 1.30—1.60 (2H, m); 2.23 (3H, s); 2.37 (6H, s); 2.40—3.45 (7H, m); 6.83 (2H, s); 18.24 (1H, s).

(ii) Allyloxyamine hydrochloride (0.72 g) and then a solution of sodium hydroxide (0.25 g) in water (3 ml) were added to a stirred mixture of 2-butyryl-3-hydroxy-5-mesitylcyclohex-2-en-1-one (1.78 g; 5.9 mmole) and 95% ethanol. The progress of the reaction was monitored using thin layer chromatography on silica gel (eluant dichloromethane). On completion of the reaction the ethanol was removed by evaporation using a rotary evaporator and the residue was extracted with dichloromethane. The organic extract was washed with aqueous 5% hydrochloric acid and then with water and dried over anhydrous magnesium sulphate. The solvent was removed by evaporation under reduced pressure using a rotary evaporator to give the product, 2[1-(allyloxyimino)butyl]-3-hydroxy-5-mesitylcyclohex-2-en-1-one (1.6 g) as an oil.

The product was characterised by proton nuclear magnetic resonance spectroscopy.

Example 6
2-[1-Ethoxyimino)butyl]-3-hydroxy-5-mesitylcyclohex-2-en-1-one
(Compound No 17 of Table 1)

Compound 17 (see Table 1) was prepared from 2-butyryl-3-hydroxy-5-mesitylcyclohex-2-en-1-one (see Example 5 part (i)) and ethoxyamine hydrochloride following essentially the same procedure as that described in Example 1 part (iv). The product was characterised by proton nuclear magnetic resonance spectroscopy.

Example 7
2-[2-(Allyloxyinino)propyl]-3-hydroxy-5-mesitylcyclohex-2-en-1-one
(Compound No 16 of Table 1)

Compound 16 (see Table 1) was prepared from 3-hydroxy-5-mesityl-2-propionylcyclohex-2-en-1-one (see Example 1 parts (i) to (iii) and allyloxyamine hydrochloride following essentially the same procedure as that described in Example 5 part (ii). The product was characterised by proton nuclear magnetic resonance spectroscopy.

Example 8

This Example illustrates the process of the invention. Plots of winter wheat and winter barley were sprayed at the early tillering stage with mixtures of isoproturon with compound No. 7 of Table 1. The spray compositions were prepared from a commercial formulation of isoproturon sold under the name of Hytane 50, which comprises a concentrated (50%) suspension of finely divided isoproturon in water containing a surface-active agent. This was mixed with a formulation of compound No. 7 and diluted with water. A surface-active agent (Agral) was added to a concentration of 0.1% in the final spray composition. (Agral is a Trade Mark for a surface-active agent comprising a 90% solution of a condensate of *p*-nonylphenol with 7 to 8 molar proportions of ethylene oxide, in alcohol).

Two formulations of compound 7 were used, and are designed as Formulations X and Y below. Formulation X comprised an emulsifiable concentrate containing 100 grams of compound 7 dissolved in anisole (400 ml) containing an emulsifier comprising a mixture of calcium dodecylbenzenesulphonate with a condensate of *p*-nonylphenol with 13 molar proportions of ethylene oxide and diluted to 1 litre with Solvesso 150 (a mixture of alkylbenzenes each having nine or ten carbon atoms. Formulation Y comprised a suspension concentrate, containing 100 grams per litre of finely divided compound 7 in water, and containing 50 grams per litre of an anionic dispersant (Morwet D425) comprising a condensate of

naphthalenesulphonic acid with formaldehyde, together with a suspending agent comprising 15 grams per litre of bentonite, 0.6 grams per litre of Keltrol, a polysaccharide thickening agent, and 3 grams per litre of Proxel, a microbiocide.

Forty-two days after treatment, the damage to the plants on the test plots was assessed on a scale of 0 to 10 where 0 is no effect and 10 is complete kill. The results are given in the Table below.

| Grams per hectare Compound 7/IPU | Formulation | Damage to Plants | | | |
|---|---|---|---|---|---|
| | | Winter barley | Winter wheat | *Avena fatua* | *Alopecurus myosuroides* |
| 50/750 | X | 0 | 0 | 10 | 9.5 |
| 100/750 | | 0 | 0 | 10 | 10 |
| 150/750 | | 0.5 | 0.5 | 10 | 10 |
| 200/750 | | 1.5 | 1 | 10 | 10 |
| 50/750 | Y | 0 | 0 | 10 | 9.5 |
| 100/750 | | 0 | 0 | 10 | 10 |
| 150/750 | | 0 | 0 | 10 | 9.5 |
| 200/750 | | 1.5 | 1.5 | 10 | 10.0 |
| IPU alone 2500 | Hytane 50 | 3.5 | 3 | 10 | 10 |

JED/jlw
PP 32728
5 April 84

**Claims**

1. A process of inhibiting the growth of weeds in crops of wheat and barley, which comprises applying to the area of the crop a composition comprising a mixture of isoproturon with a compound of the formula (I):—

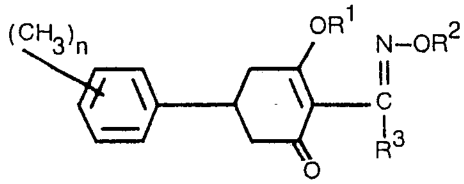

wherein $R^1$ is hydrogen, benzoyl, or benzoyl substituted with from one to three substituents chosen from halogen, nitro and cyano;

$R^2$ is methyl, ethyl, *n*-propyl, allyl, or propargyl;

$R^3$ is methyl, ethyl, *n*-propyl, allyl or propargyl; and

n is 2, 3, 4 or 5; the rate of application of the compound of formula (I) being from 50 to 500 grams per hectare and the rate of application of isoproturon being from 500 to 2000 grams per hectare.

2. A process as claimed in claim 1 wherein the compound of formula (I) is one in which n is 3 and the methyl groups $(CH_3)_n$ are located in the 2, 4, and 6-positions of the benzene ring to which they are attached.

3. A process as claimed in claim 1 or claim 2 wherein the compound of formula (I) is the compound in which $R^1$ is hydrogen; $R^2$ is ethyl; $R^3$ is ethyl; n is 3; and the three methyl groups are in the 2, 4, and 6 positions of the phenyl ring.

4. A process as claimed in any of claims 1 to 3 wherein the rate of application of the compound of formula (I) is from 50 to 150 grams per hectare and the rate of application of the isoproturon is from 1000 to 1500 grams per hectare.

5. A herbicidal composition, comprising a compound of formula (I) as defined in any of claims 1 to 3 in admixture with isoproturon.

6. A herbicidal composition as claimed in claim 5 which further contains a carrier comprising a solid or liquid diluent, and optionally further contains a surface-active agent.

7. A herbicidal composition as claimed in claim 5 or claim 6, which comprises from 10 to 85% by weight of the mixture of the compound of formula (I) with isoproturon.

**Patentansprüche**

1. Verfahren zur Hemmung des Wachstums von Unkräutern in Weizen- und Gerstenkulturen, bei dem man auf einen Flächenbereich der Kultur eine Zusammensetzung aufbringt, die eine Mischung von Isoproturon mit einer Verbindung der Formel (I) enthält:

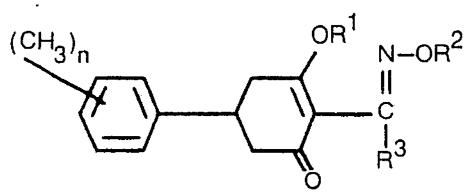

worin

$R^1$ Wasserstoff, Benzoyl oder Benzoyl ist, das mit von einem bis drei Substituenten, die aus Halogen, Nitro und Cyano ausgewählt sind, substituiert ist;

$R^2$ Methyl, Ethyl, n-Propyl, Allyl oder Propargyl ist;

$R^3$ Methyl, Ethyl, n-Propyl, Allyl oder Propargyl ist;

und

n eine der Zahlen 2, 3, 4 oder 5 ist;

wobei die Aufbringmenge der Verbindung der Formel (I) von 50 bis 500 g pro Hektar und die Aufbringmenge von Isoproturon von 500 bis 2000 g pro Hektar beträgt.

2. Verfahren nach Anspruch 1, bei dem die Verbindung der Formel (I) eine solche ist, bei der n=3 und bei der die Methylgruppen $(CH_3)_n$ sich in den 2, 4 und 6-Stellungen des Benzolrings befinden, an den sie gebunden sind.

3. Verfahren nach Anspruch 1 oder 2, bei dem die Verbindung der Formel (I) die Verbindung ist, bei der $R^1$ Wasserstoff ist; $R^2$ Ethyl ist; $R^3$ Ethyl ist; n=3; und bei der die drei Methylgruppen sich in den 2, 4 und 6-Positionen des Phenylrings befinden.

4. Verfahren nach irgendeinem der Ansprüche 1 bis 3, bei dem die Aufbringmenge der Verbindung der Formel (I) von 50 bis 150 g pro Hektar und die Aufbringmenge des Isoproturons von 1000 bis 1500 g pro Hektar beträgt.

5. Herbizide Zusammensetzung, die eine Verbindung der Formel (I), wie sie in einem der Ansprüche 1 bis 3 definiert ist, im Gemisch mit Isoproturon enthält.

6. Herbizide Zusammensetzung nach Anspruch 5, die außerdem einen Träger, der ein festes oder flüssiges Verdünnungsmittel umfaßt, sowie gegebenenfalls außerdem ein oberflächenaktives Mittel enthält.

7. Herbizide Zusammensetzung nach Anspruch 5 oder 6, die von 10 bis Gew.-% der Mischung der Verbindung der Formel (I) mit Isoproturon enthält.

**Revendications**

1. Procédé pour inhiber la croissance de mauvaises herbes dans des cultures de blé et d'orge, qui consiste à appliquer au lieu de la culture une composition comprenant un mélange d'isoproturon et d'un composé répondant à la formule (I):

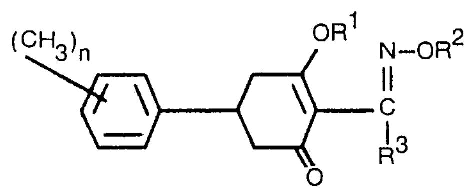

dans laquelle $R^1$ représente l'hydrogène, un groupe benzoyle ou benzoyle portant un à trois substituants choisis entre un halogène, des groupes nitro et cyano;

$R^2$ représente un groupe méthyle, éthyle, n-propyle, allyle ou propargyle;

$R^3$ représente un groupe méthyle, éthyle, *n*-propyle, allyle ou propargyle;

et

*n* a la valeur 2, 3, 4 ou 5; le taux d'application du composé de formule (I) étant compris dans l'intervalle de 50 à 500 grammes par hectare et le taux d'application d'isoproturon étant compris dans l'intervalle de 500 à 2000 grammes par hectare.

2. Procédé suivant la revendication 1, dans lequel la composé de formule (I) est un composé dans lequel *n* a la valeur 3 et les groupes méthyle $(CH_3)_n$ sont situés dans les positions 2, 4 et 6 du noyau benzénique auquel ils sont fixés.

3. Procédé suivant la revendication 1 ou la revendication 2, dans lequel le composé de formule (I) est le

composé dans lequel $R^1$ représente l'hydrogène; $R^2$ représente un groupe éthyle; $R^3$ représente un groupe éthyle; *n* a la valeur 3; et les trois groupes méthyle sont dans les positions 2, 4 et 6 du noyau phényle.

4. Procédé suivant l'une quelconque des revendications 1 à 3, dans lequel le taux d'application du composé de formule (I) est compris dans l'intervalle de 50 à 150 grammes par hectare et le taux d'application de l'isoproturon est compris dans l'intervalle de 1000 à 1500 grammes par hectare.

5. Composition herbicide comprenant un composé de formule (I) suivant l'une quelconque des revendications 1 à 3, en mélange avec de l'isoproturon.

6. Composition herbicide suivant la revendication 5, qui contient en outre un support comprenant un diluant solide ou liquide, et contient de plus facultativement un agent tensio-actif.

7. Composition herbicide suivant la revendication 5 ou la revendication 6, qui comprend 10 à 85% en poids du mélange du composé de formule (I) et d'isoproturon.